(19) **Europäisches Patentamt**

**European Patent Office**

**Office européen des brevets**

(11) **EP 1 510 834 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.⁷: **G01S 13/60**, G01S 13/58, G01S 7/35

(21) Anmeldenummer: **04090299.1**

(22) Anmeldetag: **27.07.2004**

(54) **Verfahren zur Auswertung von Dopplersignalen eines Mikrowellen-Dopplerradars zur Ermittlung der Geschwindigkeit über Grund**

Method for evaluation of Doppler signals of a microwave Doppler radar for determining speed-over-ground

Procédé pour l'évaluation de signaux Doppler d'un radar micro-ondes Doppler de détermination de vitesse par rapport au sol

(84) Benannte Vertragsstaaten:
**AT BE BG CH CY CZ DE DK EE ES FI FR GB GR HU IE IT LI LU MC NL PL PT RO SE SI SK TR**

(30) Priorität: **28.08.2003 DE 10340227**

(43) Veröffentlichungstag der Anmeldung:
**02.03.2005 Patentblatt 2005/09**

(73) Patentinhaber: **SIEMENS AKTIENGESELLSCHAFT 80333 München (DE)**

(72) Erfinder:
• **Berg, Eike**
  **10249 Berlin (DE)**
• **Kakuschke, Chris**
  **12435 Berlin (DE)**
• **Lehberger, Dominik**
  **10247 Berlin (DE)**

(56) Entgegenhaltungen:
DE-A- 3 909 644          DE-A- 4 436 723
DE-A- 19 637 009        DE-A- 19 741 783

**Beschreibung**

Die Erfindung betrifft ein Verfahren zur Auswertung von Dopplersignalen eines Mikrowellen-Dopplerradars. Die Erfindung betrifft weiter einen Prozessor und andere Speichermedien, auf denen das Verfahren in elektronischer Form gespeichert ist.

Moderne Zugbeeinflussungssysteme benötigen eine genaue Standorts- und Geschwindigkeitsbestimmung der Züge. Auch eine optimierte Antriebsschlupfregelung ist ohne Kenntnis der Momentangeschwindigkeit nicht möglich. Traditionelle Geschwindigkeitsmessverfahren basieren auf Radimpulsgebern. Diese erzeugen mit jeder Umdrehung des Rades eine definierte Anzahl von Impulsen. Die Auswertung der zeitlichen Abstände dieser Impulse führt zu einem Geschwindigkeitswert. Schlupf beim Anfahren oder Abbremsen, Blockieren während des Bremsvorgangs und eine durch Abnutzung verursachte Veränderung des Radumfanges können die gemessene Geschwindigkeit verfälschen. Die Geschwindigkeit wird deshalb neben den Radimpulsgebern berührungslos mittels Mikrowellen (Dopplerradar) gemessen.

Durch diffuse Reflexion eines Mikrowellensignals am Untergrund gelangt ein geringer Anteil wieder an die Sensorantenne. Dort entsteht durch homodyne Demodulation (Frequenzmischung von Sende- und Empfangssignal) bei einer Bewegung des Sensors relativ zum Untergrund ein niederfrequentes, statistisches Dopplersignal, das der Geschwindigkeit des Zuges direkt proportional ist.

Ein zusätzlicher Phasenschieber in der Hardware des verwendeten Sensors führt dazu, dass die Auswertung zweikanalig erfolgt, da das Dopplersignal aus einer Inphase- und einer Quadraturkomponente besteht, die zueinander je nach Fahrtrichtung eine Phasenverschiebung von $\pm 90°$ aufweisen.

Ein Analog-Digital-Wandler digitalisiert die Dopplersignale für die Signalverarbeitung mit einer konstanten AbtastFrequenz von 83 kHz.

Bedingt durch die sich überlagernden Rückstreuungen besteht das Dopplersignal nicht nur aus einer Frequenz, sondern aus einem Frequenzgemisch, so dass die Ergebnisgröße (Geschwindigkeit) aus dem Frequenzgemisch erst noch gewonnen werden muss. Hierzu sind mehrere Methoden bekannt.

Die Methoden basieren hauptsächlich auf der Fast Fourier Transformation (FFT), der Klasse der parametrischen Spektralanalyseverfahren und dem Nullstellenverfahren.

Die Fast Fourier Transformation wird beispielsweise in Joppich, M., Schätzverfahren zur Genauigkeitssteigerung der Geschwindigkeitsmessung über Grund nach dem Dopplerprinzip, Mess-, Steuerungs- und Regelungstechnik Nr. 440, VDI Verlag Düsseldorf, 1994 beschrieben. Die FFT hat wegen der blockweisen Verarbeitung einen prinzipbedingten zeitlichen Versatz der ermittelten Frequenz gegenüber der tatsächlichen Dopplerfrequenz zur Folge. Sie benötigt in der Praxis drei bis vier Signalschwingungen für eine Auswertung, dieses führt insbesondere bei sehr niedrigen Dopplerfrequenzen zu einem großen zeitlichen Versatz.

Bei den parametrischen Spektralanalyseverfahren eignen sich für die Dopplerauswertung besonders die autoregressiven Methoden, siehe beispielsweise Luu, Vu Hai, Parametrische Spektralanalyse zur Erhöhung der Auflösung von Strömungs- und Distanzmessverfahren auf der Grundlage des Dopplereffekts, Dissertation an der Fakultät für Elektrotechnik und Informationstechnik der Universität Chemnitz-Zwickau, 1995. Diese erfordern jedoch eine sehr rechenaufwendige Auswertung des Spektrums. Die Notwendigkeit einer a priori-Schätzung der Geschwindigkeit zur Signalauswertung beschränkt ihren Einsatz bei hohen Zuverlässigkeitsforderungen und erfordert zusätzlich ein weiteres Auswerteverfahren, welches ohne Eingangsschätzung beziehungsweise Rückkoppelung funktioniert.

Als einfache und weit verbreitete Methode zu Ermittlung von Frequenzen ist das Nullstellenverfahren bekannt. Hierbei werden die zeitlichen Abstände der Nulldurchgänge des Dopplersignals gemessen und in Geschwindigkeitswerte umgerechnet. Das Verfahren eignet sich gut für rauschfreie Signale oder Signale mit sehr hohem Signal-Rausch-Verhältnis. Reale Dopplersignale sind jedoch häufig von sehr hohem Rauschen überlagert.

Der Erfindung liegt die Aufgabe zugrunde, ein Verfahren anzugeben, mit dem die Auswertung von Mikrowellen-Dopplersignalen, die von Rauschen überlagert sind, trotzdem hinreichend genau möglich ist.

Erfindungsgemäß wird die Aufgabe gelöst durch die Merkmale der Ansprüche 1, 15, 16 und 17. Zweckmäßige Ausgestaltungen sind Gegenstand der Unteransprüche.

Danach werden

- drei sich überlappende Geschwindigkeitsbereiche definiert, die jeweils für die Auswertung von verschiedenen Geschwindigkeitswerten konzipiert sind und parallel mit rechentechnisch an die jeweilige Geschwindigkeit angepasster Abtastrate abgetastet werden;

- die Abtastsignale jeweils einer vom jeweiligen Geschwindigkeitsbereich abhängigen Signalvorverarbeitung unterzogen;

- in allen Geschwindigkeitsbereichen die die Periodendauer des Dopplersignals repräsentierenden zeitlichen Abstände vom Über- und Unterschreiten der Abtastsignale über beziehungsweise unter einen positiven und negativen Schwellwert bis zum jeweils nächsten gleichartigen Über- und Unterschreiten des Schwellwertes erfasst;

- die Schwellwerte in jedem Geschwindigkeitsbereich anhand der Abtastsignale nachgeführt;

- die erfassten Werte der Periodendauern für jeweils mehrere Perioden der unmittelbaren Vergangenheit in jedem Geschwindigkeitsbereich geeignet gemittelt;

- drei Entscheidungskriterien zur Auswahl des Geschwindigkeitsbereiches definiert, aus dem die Geschwindigkeit ermittelt werden soll, und

- an eine übergeordnete Auswerteeinheit der berechnete Geschwindigkeitswert aus dem betreffenden Geschwindigkeitsbereich übergeben.

Die Phasenbeziehung zwischen den zwei Kanälen (Inphase- und Quadraturkanal) ermöglicht neben der Erkennung der Fahrtrichtung das Aufstellen weiterer Entscheidungskriterien. Es wird für jeden Geschwindigkeitsbereich ein Entscheidungskriterium gebildet, indem die Summe der Abtastwerte eines Kanals, die jeweils vom Unterschreiten des positiven Schwellwertes bis zum Unterschreiten des negativen Schwellwertes und vom Überschreiten des negativen Schwellwertes bis zum Überschreiten des positiven Schwellwertes des jeweils anderen Kanals aufsummiert werden, voneinander subtrahiert werden. Die Entscheidungskriterien erlauben die Erfassung des Zustandes Stillstand sowie die Auswahl über den aktuell zutreffenden Geschwindigkeitsbereich.

Die Erfindung soll nachstehend anhand eines Ausführungsbeispiels näher erläutert werden. In den zugehörigen Zeichnungen zeigen:

Figur 1    einen Programmablaufplan für das Verfahren;

Figur 2    eine Darstellung zur Ermittlung der Signalfrequenz;

Figur 3    einen zugehörigen Zustandsautomaten;

Figur 4    die Ermittlung eines Entscheidungskriteriums und

Figur 5    das verwendete Median-Filterverfahren.

Das Ausführungsbeispiel bezieht sich auf die Anwendung eines Dopplerradars für die Geschwindigkeitsmessung von Triebfahrzeugen. Zu erfüllen sind hierbei insbesondere Forderungen hinsichtlich Verfügbarkeit, zuverlässiger Erkennung des Fahrtzustandes Stillstand und der Fahrtrichtung, geringer zeitlicher Verzögerung beim Anfahren aus dem Stillstand und Echtzeitfähigkeit.

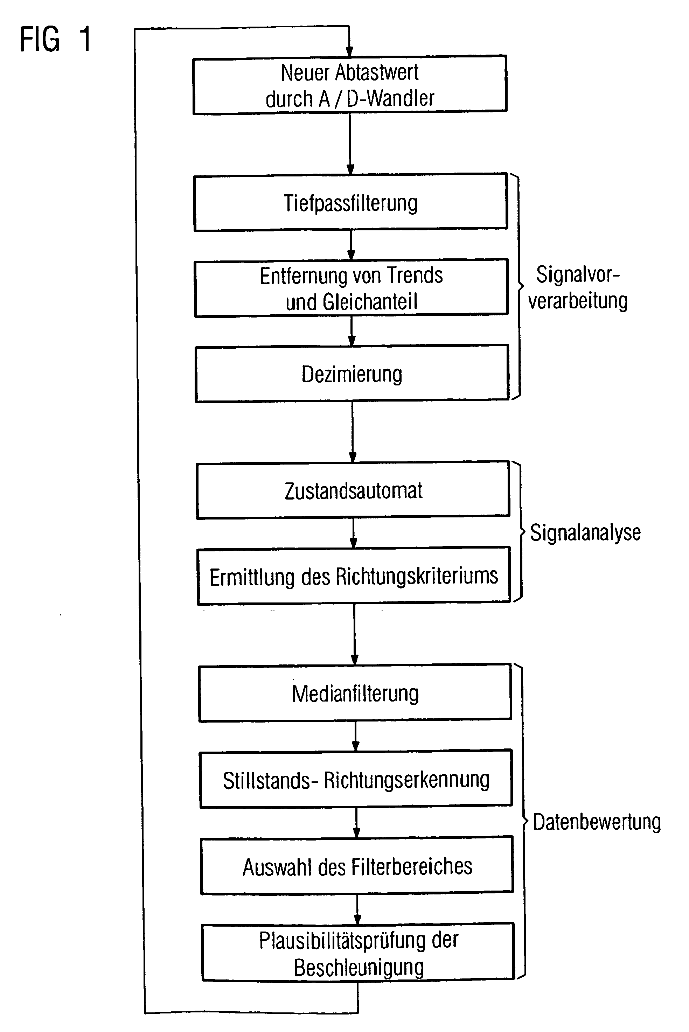

Figur 1 zeigt schematisch die Schritte zur Ermittlung der Dopplerfrequenz nach dem erfindungsgemäßen Verfahren in einem Programmablaufplan.

Um die gestellten Anforderungen zu erfüllen, erfolgt die Signalverarbeitung getrennt für jeden der zwei Kanäle (Inphase und Quadratur) in jeweils drei Geschwindigkeitsbereichen LOW, MID und HIGH.

Es besteht die Notwendigkeit, die durch einen A/D-Wandler bereitgestellten Abtastwerte vor der Auswertung aufzubereiten. Für die Entfernung der im Signal vorhandenen Gleichanteile und Trends eignet sich das Verfahren der exponentiellen Glättung. Dafür berechnet man eine Hilfsgröße nach der Gleichung

$$h(k)=h(k\text{-}1)\cdot(1\text{-}\alpha)+ p(k)\cdot\alpha \qquad (1)$$

mit

h(k)       aktuelle Hilfsgröße
h(k-1)     vorangegangene Hilfsgröße
p(k)       aktueller Eingangswert (Signalpegel)
$\alpha$        Glättungskonstante ($0\leq\alpha\leq1$).

Bei der Hilfsgröße handelt es sich um das tiefpassgefilterte Originalsignal. Die Hilfsgröße ist ein gewichteter Mittelwert aus dem aktuellen Originalsignal und vorangegangenen Werten der Hilfsgröße. Die Gewichtung nimmt in Abhängigkeit von der Höhe der Glättungskonstante exponentiell ab. Die exponentielle Glättung kann auch als eine durch IIR-Filterung erzeugte Mittelwertbildung über die Eingangswerte bezeichnet werden.

Im zweiten Schritt erfolgt die Gleichanteilbefreiung durch Subtraktion der Hilfsgröße vom Originalsignal. Dies führt im resultierenden Signal zur Dämpfung der niederfrequenten Signalanteile (Gleichanteile). Die Wahl der Glättungskonstante richtet sich nach der auszuwertenden Signalfrequenz und ist für jeden der drei Geschwindigkeitsbereiche unterschiedlich.

Der Berechnungsaufwand hängt unmittelbar von der Abtastrate ab, deshalb findet eine Dezimierung der Abtastrate in den Geschwindigkeitsbereichen LOW und MID statt. In der Dezimierung implizit enthalten ist eine FIR-Filterung. Sie realisiert eine Tiefpassfilterung des Signals, so dass hochfrequente Signalanteile gedämpft werden.

Das Dopplersignal weist beim Übergang des Bahnfahrzeugs aus dem Stillstand in langsame Fahrt ein sehr geringes Signal-Rausch-Verhältnis auf. Das im Dopplersignal enthaltene Rauschen besitzt in dieser Phase eine deutlich höhere Amplitude und Leistung als das Nutzsignal. Ein Großteil der Leistung des Rauschens befindet sich dabei aber in Frequenzen, die weit über den zu langsamer Fahrt (LOW) gehörenden Dopplerfrequenzen liegen. Aus diesem Grund verringert eine daran angepasste Tiefpassfilterung die Leistung des Rauschens. Die Nutzkomponente des Dopplersignals erfährt dabei keine Dämpfung. Damit erhöht sich das Signal-Rausch-Verhältnis. Bei Hochgeschwindigkeitsfahrt ist das Signal-Rausch-Verhältnis wesentlich höher. In dieser Phase ist deshalb keine Tiefpassfilterung notwendig.

Das vorliegende Verfahren benötigt eine deutliche ÜberAbtastung im Sinne der digitalen Signalverarbeitung. Aus diesem Grund wird die Abtastrate im LOW-Bereich lediglich um den Faktor 25, im MID-Bereich um den Faktor 5 reduziert. Eine Reduzierung im HIGH-Bereich ist nicht möglich.

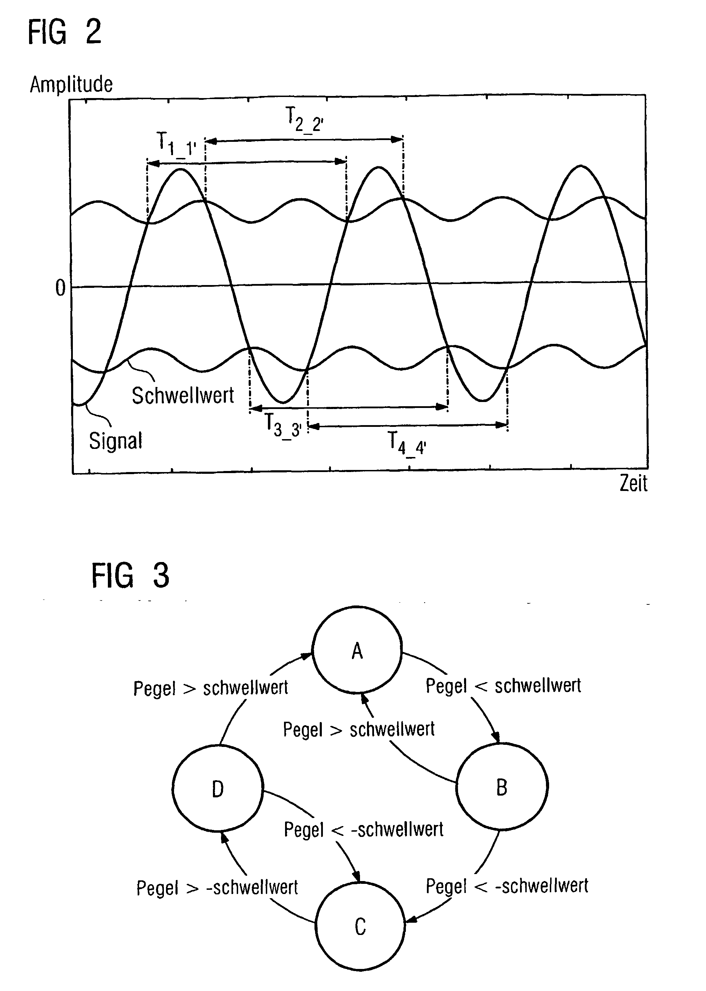

Figur 2 zeigt die Berechung der Frequenz. Abgebildet ist der zeitliche Verlauf eines ungestörten sinusförmigen Signals und zweier Schwellwerte. Die Ermittlung der Signalfrequenz findet anhand des zeitlichen Abstandes zwischen zwei gleichartigen Schwellwertübergängen statt. Dabei entsprechen die Schwellwerte in ihrer Höhe etwa dem positiven und negativen gemittelten Effektivwert des Signals. Das zu analysierende Signal wechselt mit jeder Periode zweimal über den positiven (oberen) und zweimal über den negativen (unteren) Schwellwert, dadurch lassen sich vier Periodendauern ($T_{1\_1}$, bis $T_{4\_4'}$) bestimmen.

Die Berechnung der Schwellwerte erfolgt gemäß Gleichung (2) wiederum mit dem Verfahren der exponentiellen Glättung:

$$s(k) = s(k - 1)\cdot(1 - \beta) + abs(p(k)) \cdot \beta \qquad (2)$$

mit

| | |
|---|---|
| $s(k)$ | aktueller Schwellwert |
| $s(k-1)$ | vorausgehender Schwellwert |
| $abs()$ | Funktion zur Ermittlung des Betrags |
| $p(k)$ | aktueller Signalpegel |
| $\beta$ | Glättungskonstante ($0 \le \beta \le 1$). |

Die Wahl der Glättungskonstanten hat eine große Bedeutung. Sie bietet die Möglichkeit, das Verhalten der Schwellwerte bei Änderung der Signalamplitude genau festzulegen. Ein geringer Wert der Konstante resultiert in einem flachen und trägen Verhalten, während ein hoher Wert zu Welligkeit, aber flinker Nachführung führt.

Genau genommen berechnet Gleichung (2) den Mittelwert des gleichgerichteten Signals. Bei sinusförmigen Signalen sowie bei weißem Rauschen liegt dieser geringfügig (10 bis 15 %) unterhalb des Effektivwertes. Eine direkte Berechnung des Effektivwertes würde auf einem digitalen Signal-Prozessor (DSP) zu Problemen führen, da die Wurzelbildung nur auf iterativem Weg gelöst werden kann. Damit würde die Berechnung des Effektivwertes wesentlich mehr Zeit erfordern als die Berechnung der verwendeten Größe.

Die eigentliche Ermittlung der Periodendauer erfolgt für jeden Bereich und jeden Kanal getrennt mit einem Zustandsautomaten. Der Automat registriert und protokolliert die Zeitpunkte der Schwellwertübertritte. Dabei wird folgende Annahme über das Signalverhalten gemacht.

- Das Signal überschreitet zu einem unbekannten Zeitpunkt den oberen Schwellwert (Automat in Zustand A).

- Nach einer gewissen Zeit unterschreitet es wieder den oberen Schwellwert (Automat in Zustand B).

- Nach einer gewissen Zeit unterschreitet es wieder den unteren Schwellwert (Automat in Zustand C).

- Nach einer gewissen Zeit überschreitet es wieder den unteren Schwellwert (Automat in Zustand D), danach kann wieder zu Zustand A gesprungen werden.

Die Berechnung der Periodendauern erfolgt erst, nachdem alle vier Zustände des Automaten durchlaufen worden sind. Damit werden nur die Schwingungen erfasst, deren Amplitude zeitweise den oberen und nachfolgend den unteren Schwellwert überschreitet. Durch seinen weitaus geringeren Effektivwert und die daraus resultierende geringere Schwankungsbreite der Amplitude ist das Rauschen dazu nicht in der Lage.

Die graphische Darstellung des Zustandsautomaten in Figur 3 veranschaulicht diese Periodizität. Ein Schwellwertübergang führt zu einer Veränderung des Zustands des Automaten. Die Zeitpunkte jeder Änderung werden gespeichert. Anhand dieser Zeitpunkte erfolgt die Berechnung der Periodendauer.

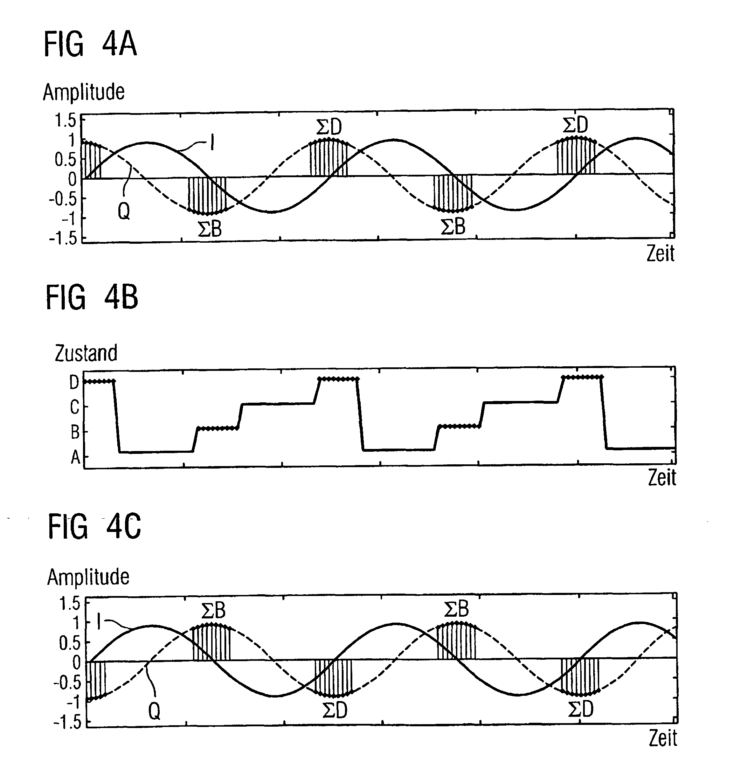

Die Auswahl des Geschwindigkeitsbereichs und die Erkennung des Fahrzustandes Stillstand erfolgt mit einem für jeden Bereich getrennt gebildeten Entscheidungskriterium. Im Zustand B und D des Automaten des betreffenden Kanals und Filterbereichs werden die Pegel des jeweils anderen Kanals aufsummiert. Ein Beispiel für den I-Kanal ist in Figur 4 dargestellt. Teil a) und c) zeigen jeweils den Verlauf eines Inphase- und Quadraturkanals während Vorwärts- und Rückwärtsfahrt. Der Graph in Teil b) repräsentiert den Zustand des Zustandsautomaten des I-Kanals. Wie in Figur 3 dargestellt, werden die Zustände durch Schwellwertübergänge festgelegt. Die dabei resultierenden Summen $\Sigma B$ und $\Sigma D$ gehen in die Berechnung einer Gesamtsumme $\Sigma BD$ ein:

$$\Sigma BD = \Sigma B - \Sigma D \qquad (3)$$

mit

| | |
|---|---|
| $\Sigma BD$ | Gesamtsumme der Pegel |
| $\Sigma B$ | aufsummierte Pegel im Zustand B |
| $\Sigma D$ | aufsummierte Pegel im Zustand D. |

Je nach Fahrtrichtung nimmt die nach Gleichung (3) berechnete Summe für eine Periodendauer ein unterschiedliches Vorzeichen an.

Wie bereits erwähnt, sind die drei Filterbereiche eines Kanals für die Auswertung verschiedener Geschwindigkeiten (Frequenzen) konzipiert. Sollte die tatsächliche Signalfrequenz über der durch den betreffenden Zweig analysierbaren Frequenz liegen, ist das Entscheidungskriterium dieses Zweiges im Vergleich zu denen der anderen Zweige geringerwertig. Dieses Verhalten resultiert aus der filterbedingten Amplitudendämpfung.

Die Fahrtrichtung kann direkt anhand des Vorzeichens des Entscheidungskriteriums des ausgewählten Bereichs bestimmt werden.

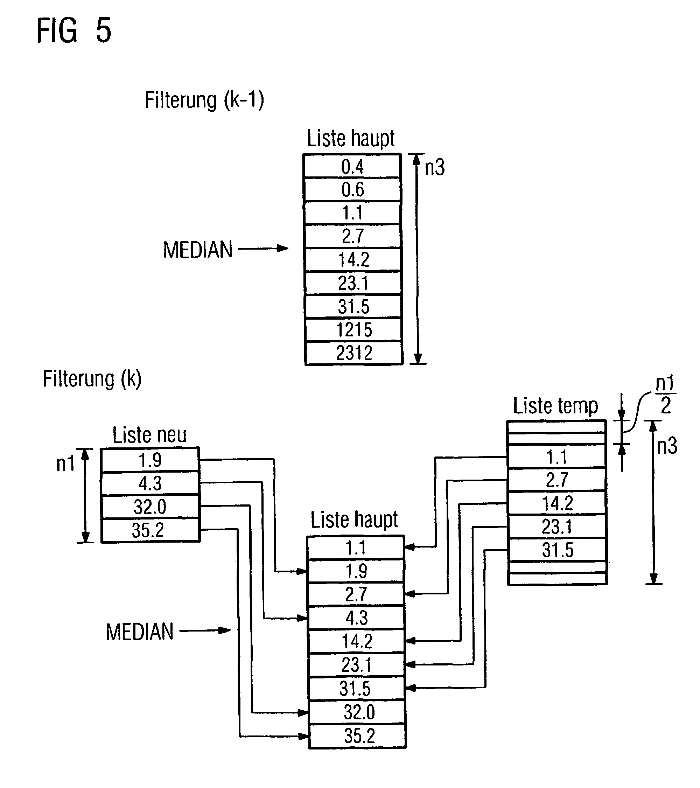

Die Nachbearbeitung der Periodendauern erfordert eine Mittelwertbildung. Für das vorliegende Ausführungsbeispiel wurde ein Filterverfahren entwickelt, das bei geringem Sortieraufwand einen Median aus einem bei jeder neuen Periodendauer aktualisierten Feld ermittelt. Die Medianfilterung besteht in der fortlaufenden Aktualisierung und Sortierung einer Liste der beispielsweise zweihundert zuletzt ermittelten Periodendauern. Der Median entspricht dann dem Wert, der in der sortierten Liste die Eigenschaft besitzt, dass die Anzahl der größeren und kleineren Werte identisch ist. Das Verfahren ist in Figur 5 dargestellt.

Das Verfahren benötigt drei Listen. Liste *neu* dient zur Aufnahme neuer Periodendauern vor deren Einsortierung in Liste *haupt.* Die Liste *haupt* ist die zur Ermittlung des Medians zugrunde gelegte Liste. Sie enthält die letzten zweihundert Periodendauern in sortierter Reihenfolge. Jede neu ermittelte Periodendauer in einem der beiden Kanäle eines Bereichs wird in Liste *neu* gespeichert. In Simulationen hat sich eine Listenlänge von vier Elementen als günstig herausgestellt. Bereits während des Einfügens der neuen Werte in diese Liste findet eine Sortierung der Periodendauern statt. Wegen der geringen Länge der Liste führt dieses Vorgehen zu vernachlässigbarem Berechungs- und Verschiebeaufwand. Nachdem die Anzahl der eingetragenen Periodendauern in Liste *neu* den vorgegebenen Wert überschritten hat, führt das neu entwickelte Drei-Listen-Verfahren die Periodendauern der Liste *temp* und *neu* in sortierter Reihenfolge in die zur Berechnung des Medians herangezogene Liste *haupt* über.

Bei Liste *temp* handelt es sich um eine temporäre Kopie eines Abschnitts der Liste *haupt.* Um die Länge der Liste *haupt* bei der späteren Zusammenführung konstant zu halten, ist es notwendig, dass die beiden größten und die beiden kleinsten Werte nicht mitkopiert werden. Aus Gründen der Übersichtlichkeit beinhaltet die Liste *haupt* in der Darstellung nach Figur 5 lediglich neun Elemente. Die Länge der Liste *temp* beträgt damit fünf Elemente. Die Periodendauern in der Liste *temp* liegen wegen des vorherigen Sortiervorgangs bereits in sortierter Reihenfolge vor.

Diese Medianfilterung wird für jeden der drei Geschwindigkeitsbereiche getrennt durchgeführt, die Periodendauern des I- und des Q-Kanals werden dabei geeignet zusammengeführt.

Das Verfahren stellt einen guten Kompromiss zwischen einer sequentiellen und einer blockweisen Listenfilterung dar.

Eine große Bedeutung hat die Erkennung des Fahrtzustands Stillstand. Im Stillstand des Bahnfahrzeugs kommt es ausschließlich durch das im Signal enthaltene Rauschen zu Übergängen über die Schwellwerte.

Für alle drei Entscheidungskriterien existiert ein gemeinsamer Grenzwert. Solange alle Kriterien diesen Grenzwert unterschreiten, wird von Stillstand ausgegangen. Im Stillstand ist aus physikalischen Gründen kein Doppleranteil mehr im Signal vorhanden, sämtliche Schwellwertübergänge werden durch das Rauschen verursacht. Bedingt durch das fehlende Dopplersignal besteht keine Korrelation zwischen I- und Q-Kanal. Dies führt bei der Ermittlung des Entscheidungskriteriums dazu, dass Signalamplitude und Vorzeichen des jeweils anderen Kanals während der Summenbildung zufällig sind. Da es sich aufgrund der Signalvorverarbeitung um ein mittelwertfreies stationäres Rauschen handelt, tendiert das Entscheidungskriterium zu Null.

Durch die parallele Verarbeitung stehen für jeden Kanal drei Frequenzwerte und drei Entscheidungskriterien zur Verfügung. Durch einen Voter wird die Geschwindigkeit immer aus dem Bereich entnommen, der das betragsmäßig größte Kriterium aufweist.

Die ermittelten Periodendauern unterliegen großen Schwankungen, dieses lässt sich durch den statistischen Charakter des Dopplersignals erklären. Aus diesem Grund korrigiert ein Beschleunigungsvoter die Ergebnisse vor der Weiterverarbeitung. Dieser nutzt das Modellwissen über die im schienengebundenen Transportwesen maximal vorkommenden Beschleunigungen aus und limitiert die Veränderungen der ermittelten Geschwindigkeit zwischen zwei Voteraufrufen auf plausible Werte.

Das erfindungsgemäße Verfahren hat gegenüber bisherigen Verfahren folgende Vorteile:

- Die implementierte Medianfilterung ist aufgrund der benötigten Rechenoperationen auf einem DSP echtzeittauglich.

- Durch Multirate-Signalverarbeitung mit Einteilung in mehrere parallel abgearbeitete Bereiche pro Kanal ist das Verfahren auf einem DSP echtzeittauglich, da zeitintensive Programmteile abtastratenabhängig abgearbeitet werden.

- Die Auswertung des Dopplersignals erfolgt mit geringer zeitlicher Verzögerung.

- Die Ermittlung der Geschwindigkeiten ist ab 15 Hz genau und zuverlässig.

- Die Stillstandserkennung ist zuverlässig und schnell.

- Die Fahrtrichtungserkennung ist zuverlässig und schnell.

- Durch die Nachführung der Schwellwerte mit exponentieller Glättung ist das Verfahren in der Lage, auch bei starker Amplitudendynamik zuverlässige Ergebnisse zu liefern.

- Es werden keine Eingangsschätzgrößen benötigt, das Verfahren ist rückführungsfrei.

- Durch die FIR-Filterung (Dezimation mit Aufsummierung) und die IIR-Filterung (Tiefpassfilterung im LOW-Bereich) ist das Verfahren auch bei relativ niedrigem Signal-Rausch-Verhältnis einsatzfähig.

- Zustandsautomat für Frequenzermittlung und Richtungserkennung, damit geringe Störempfindlichkeit gegenüber durch Rauschen provozierten Mehrfachgrenzwertübergängen.

**Patentansprüche**

1. Verfahren zur Auswertung von Dopplersignalen eines Geschwindigkeits-Dopplerradars zur Ermittlung der Geschwindigkeit über Grund, **dadurch gekennzeichnet, dass**

    - drei sich überlapende Geschwindigkeitsbereiche definiert werden, die jeweils für die Auswertung von verschiedenen Geschwindigkeitswerten konzipiert sind und parallel mit rechentechnisch an die jeweilige Geschwindigkeit angepasster Abtastrate abgetastet werden;

    - die Abtastsignale jeweils einer vom jeweiligen Geschwindigkeitsbereich abhängigen Signalvorverarbeitung unterzogen werden;

    - in allen Geschwindigkeitsbereichen die die Periodendauer eines Dopplersignals repräsentierenden zeitlichen Abstände vom Über- und Unterschreiten der Abtastsignale über beziehungsweise unter einen positiven und negativen Schwellwert bis zum jeweils nächsten gleichartigen Über- und Unterschreiten des Schwellwertes erfasst werden;

    - die Schwellwerte in jedem Geschwindigkeitsbereich anhand der Abtastsignale nachgeführt werden;

    - die erfassten Werte der Periodendauern für jeweils mehrere Perioden der unmittelbaren Vergangenheit in jedem Geschwindigkeitsbereich geeignet gemittelt werden;

    - drei Entscheidungskriterien entsprechend den drei Geschwindigkeitsbereichen zur Auswahl des jeweiligen Geschwindigkeitsbereiches definiert werden, aus dem die Geschwindigkeit ermittelt werden soll, und

    - an eine übergeordnete Auswerteeinheit der berechnete Geschwindigkeitswert aus dem betreffenden Geschwindigkeitsbereich übergeben wird.

2. Verfahren nach Anspruch 1, **dadurch gekennzeichnet, dass** die positiven und negativen Schwellwerte exponentiell geglättet werden.

3. Verfahren nach Anspruch 1 oder 2, **dadurch gekennzeichnet, dass** die positiven und negativen Schwellwerte jeweils etwa in Höhe des Effektivwertes der Dopplersignale nachgeführt werden.

4. Verfahren nach einem der vorhergehenden Ansprüche, **dadurch gekennzeichnet, dass** die Tiefpassfilterung mit einer Dezimierung der Abtastrate erfolgt.

5. Verfahren nach einem der vorhergehenden Ansprüche, **dadurch gekennzeichnet, dass** eine Entfernung von Gleichanteilen in den Abtastwerten erfolgt, indem ein tiefpassgefiltertes Signal vorhergegangener Abtastwerte von dem aktuellen Abtastwert subtrahiert wird.

6. Verfahren nach einem der vorhergehenden Ansprüche, **dadurch gekennzeichnet, dass** aus der Richtung der Phasenverschiebung der zwei Kanäle zueinander die relative Bewegungsrichtung des die Mikrowellensignale des Dopplerradars aussendenden Objektes ermittelt wird.

7. Verfahren nach Anspruch 6, **dadurch gekennzeichnet, dass** für jeden Geschwindigkeitsbereich ein Entscheidungskriterium gebildet wird, indem die Summe der Abtastwerte eines Kanals, die jeweils vom Unterschreiten des positiven Schwellwertes bis zum Unterschreiten des negativen Schwellwertes und vom Überschreiten des negativen Schwellwertes bis zum Überschreiten des positiven Schwellwertes des jeweils anderen Kanals aufsummiert werden, voneinander subtrahiert werden.

8. Verfahren nach Anspruch 6 oder 7, **dadurch gekennzeichnet, dass** die Auswahl des zutreffenden Geschwindigkeitsbereiches anhand des betragsmäßig größten Wertes aller ermittelten Entscheidungskriterien erfolgt.

9. Verfahren nach einem der Ansprüche 1 bis 8, **dadurch gekennzeichnet, dass** die Werte für die Periodendauer einer Median-Filterung unterzogen werden.

10. Verfahren nach Anspruch 9, **dadurch gekennzeichnet, dass** die Median-Filterung mit Hilfe einer Median-Liste mit einer Anzahl von Vergangenheitswerten erfolgt, indem vier Werte für die Periodendauer in eine erste Hilfsliste sortiert werden, eine zweite Hilfsliste aus der Median-Liste erstellt wird, die um die zwei kleinsten und zwei größten Werte reduziert ist, und die erste und zweite Hilfsliste gemeinsam in die Median-Liste neu einsortiert werden, aus der der Mittelwert entnommen wird.

11. Verfahren nach einem der vorhergehenden Ansprüche, **dadurch gekennzeichnet, dass** die ermittelte Geschwindigkeit auf Null gesetzt wird, wenn alle Entscheidungskriterien in ihrem jeweiligen Geschwindigkeitsbereich unter einem vorbestimmten Begrenzungswert liegen.

12. Verfahren nach Anspruch 11, **dadurch gekennzeichnet, dass** die Begrenzungswerte für die Stillstandserkennung für alle Geschwindigkeitsbereiche gleich sind.

13. Anordnung zur Auswertung von Dopplersignalen eines Geschwindigkeits-Dopplerradars zur Ermittlung der Geschwindigkeit über Grund mit einem Prozessor, der derart eingerichtet ist, dass folgende Schritte durch geführt werden:

 - es werden drei sich überlappende Geschwindigkeitsbereiche definiert, die jeweils für die Auswertung von verschiedenen Geschwindigkeitswerten konzipiert sind und parallel mit rechentechnisch an die jeweilige Geschwindigkeit angepasster Abtastrate abgetastet werden;

 - die Abtastsignale werden jeweils einer vom jeweiligen Geschwindigkeitsbereich abhängigen Signalvorverarbeitung unterzogen;

 - in allen Geschwindigkeitsbereichen werden die die Periodendauer eines Dopplersignals repräsentierenden zeitlichen Abstände vom Über- und Unterschreiten der Abtastsignale über beziehungsweise unter einen positiven und negativen Schwellwert bis zum jeweils nächsten gleichartigen Über-und Unterschreiten des Schwellwertes erfasst;

 - die Schwellwerte werden in jedem Geschwindigkeitsbereich anhand der Abtastsignale nachgeführt;

 - die erfassten Werte der Periodendauern werden für jeweils mehrere Perioden der unmittelbaren Vergangenheit in jedem Geschwindigkeitsbereich geeignet gemittelt;

 - es werden drei Entscheidungskriterien entsprechend den drei Geschwindigkeitsbereichen zur Auswahl des jeweiligen Geschwindigkeitsbereiches definiert, aus dem die Geschwindigkeit ermittelt werden soll, und

 - der berechnete Geschwindigkeitswert aus dem betreffenden Geschwindigkeitsbereich wird an eine übergeordnete Auswerteeinheit übergeben.

14. Computerprogramm zur Auswertung von Dopplersignalen eines Geschwindigkeits-Dopplerraders zur Ermittlung der Geschwindigkeit über Grund, das auf einem computerlesbaren Speichermedium gespeichert ist, und das, wenn es auf einem Computer abgearbeitet wird, nachdem es in den Speicher des Computers geladen wunde, folgende Schritte durch führt:

 - es werden drei sich überlappende Geschwindigkeitsbereiche definiert, die jeweils für die Auswertung von verschiedenen Geschwindigkeitswerten konzipiert sind und parallel mit rechentechnisch an die jeweilige Geschwindigkeit angepasster Abtastrate abgetastet werden;

 - die Abtastsignale werden jeweils einer vom jeweiligen Geschwindigkeitsbereich abhängigen Signalvorverarbeitung unterzogen;

 - in allen Geschwindigkeitsbereichen werden die die Periodendauer eines Dopplersignals repräsentierenden zeitlichen Abstände vom Über- und Unterschreiten der Abtastsignale über beziehungsweise unter einen positiven und negativen Schwellwert bis zum jeweils nächsten gleichartigen Über-und Unterschreiten des Schwellwertes erfasst;

 - die Schwellwerte werden in jedem Geschwindigkeitsbereich anhand der Abtastsignale nachgeführt;

 - die erfassten Werte der Periodendauern werden für jeweils mehrere Perioden der unmittelbaren Vergangenheit in jedem Geschwindigkeitsbereich geeignet gemittelt;

 - es werden drei Entscheidungskriterien entsprechend den drei Geschwindigkeitsbereichen zur Auswahl des jeweiligen Geschwindigkeitsbereiches definiert, aus dem die Geschwindigkeit ermittelt werden soll, und

- der berechnete Geschwindigkeitswert aus dem betreffenden Geschwindigkeitsbereich wird an eine übergeordnete Auswerteeinheit übergeben.

15. Computerlesbares Speichermedium, auf dem ein Programm zur Auswertung von Dopplersignalen eines Geschwindigkeits-Dopplerraders zur Ermittlung der Geschwindigkeit über Grund gespeichert ist, welches wenn es auf einem Computer abgearbeitet wird, nachdem es in den Speicher des Computers geladen wurde, folgende Schritte durchführt:

- es werden drei sich überlappende Geschwindigkeitsbereiche definiert, die jeweils für die Auswertung von verschiedenen Geschwindigkeitswerten konzipiert sind und parallel mit rechentechnisch an die jeweilige Geschwindigkeit angepasster Abtastrate abgetastet werden;

- die Abtastsignale werden jeweils einer vom jeweiligen Geschwindigkeitsbereich abhängigen Signalvorverarbeitung unterzogen;

- in allen Geschwindigkeitsbereichen werden die die Periodendauer eines Dopplersignals repräsentierenden zeitlichen Abstände vom Über- und Unterschreiten der Abtastsignale über beziehungsweise unter einen positiven und negativen Schwellwert bis zum jeweils nächsten gleichartigen Über-und Unterschreiten des Schwellwertes erfasst;

- die Schwellwerte werden in jedem Geschwindigkeitsbereich anhand der Abtastsignale nachgeführt;

- die erfassten Werte der Periodendauern werden für jeweils mehrere Perioden der unmittelbaren Vergangenheit in jedem Geschwindigkeitsbereich geeignet gemittelt;

- es werden drei Entscheidungskriterien entsprechend den drei Geschwindigkeitsbereichen zur Auswahl des jeweiligen Geschwindigkeitsbereiches definiert, aus dem die Geschwindigkeit ermittelt werden soll, und

- der berechnete Geschwindigkeitswert aus dem betreffenden Geschwindigkeitsbereich wird an eine übergeordnete Auswerteeinheit übergeben.

**Claims**

1. Method for evaluation of Doppler signals in a speed Doppler radar in order to determine speed over ground, **characterized in that**

- three overlapping speed ranges are defined, which are each conceived for evaluation of different speed values and are sampled in parallel at a sampling rate which is matched for computation purposes to the respective speed;

- the sample signals are each subjected to signal preprocessing which is dependent on the respective speed range;

- the time intervals which represent the period duration of a Doppler signal are recorded in all speed ranges from the point at which the sample signals exceed or undershoot a positive and a negative threshold value, respectively, until the respective next identical overshoot or undershoot of the threshold value;

- the threshold values in each speed range are readjusted on the basis of the sample signals;

- the recorded values of the period durations are averaged in a suitable form in each case for a plurality of periods in the immediate past in each speed range;

- three decision criteria are defined, corresponding to the three speed ranges, for selection of the respective speed range from which the speed is intended to be determined, and

- the calculated speed value from the relevant speed range is transferred to a higher-level evaluation unit.

2. Method according to Claim 1, **characterized in that** the positive and negative threshold values are smoothed exponentially.

3. Method according to Claim 1 or 2, **characterized in that** the positive and negative threshold values are in each case readjusted to approximately the same magnitude as the effective value of the Doppler signals.

4. Method according to one of the preceding claims, **characterized in that** low-pass filtering is carried out, with decimation of the sampling rate.

5. Method according to one of the preceding claims, **characterized in that** identical components in the sample values are removed by subtracting a low-pass-filtered signal from previous sample values from the current sample value.

6. Method according to one of the preceding claims, **characterized in that** the relative movement direction of the object transmitting the microwave signals of the Doppler radar is determined from the direction of the phase shift of the two channels with respect to one another.

7. Method according to Claim 6, **characterized in that** a decision criterion is formed for each speed range by subtracting from one another the sum of the sample values of one channel, which are in each case added up from the undershooting of the positive threshold value until the undershooting of the negative threshold value and from the overshooting of the negative threshold value to the exceeding of the positive threshold value in the respective other channel.

8. Method according to Claim 6 or 7, **characterized in that** the relevant speed range is selected on the basis of the value with the greatest magnitude of all the determined decision criteria.

9. Method according to one of Claims 1 to 8, **characterized in that** the values are subjected to median filtering for the period duration.

10. Method according to Claim 9, **characterized in that** the median filtering is carried out with the aid of a median list with a number of previous values by sorting four values for the period duration into a first auxiliary list, by creating a second auxiliary list from the median list, which is reduced by the two smallest and the two largest values, and by resorting the first and the second auxiliary list jointly into the median list from which the mean value is taken.

11. Method according to one of the preceding claims, **characterized in that** the determined speed is set to zero when all of the decision criteria are below a predetermined limit value in their respective speed range.

12. Method according to Claim 11, **characterized in that** the limit values for zero-speed identification are the same for all speed ranges.

13. Arrangement for evaluation of Doppler signals in a speed Doppler radar in order to determine speed over ground, having a processor which is designed in such a way that the following steps are carried out:

- three overlapping speed ranges are defined, which are each conceived for evaluation of different speed values and are sampled in parallel at a sampling rate which is matched for computation purposes to the respective speed;

- the sample signals are each subjected to signal preprocessing which is dependent on the respective speed range;

- the time intervals which represent the period duration of a Doppler signal are recorded in all speed ranges from the point at which the sample signals exceed or undershoot a positive and a negative threshold value, respectively, until the respective next identical overshoot or undershoot of the threshold value;

- the threshold values in each speed range are readjusted on the basis of the sample signals;

- the recorded values of the period durations are averaged in a suitable form in each case for a plurality of periods in the immediate past in each speed range;

- three decision criteria are defined, corresponding to the three speed ranges, for selection of the respective speed range from which the speed is intended to be determined, and

- the calculated speed value from the relevant speed range is transferred to a higher-level evaluation unit.

14. Computer program for evaluation of Doppler signals in a speed Doppler radar in order to determine speed over ground, which computer program is stored in a computer-legible memory medium and, when it is processed in a computer, once it has been loaded in the computer memory, carries out the following steps:

- three overlapping speed ranges are defined, which are each conceived for evaluation of different speed values and are sampled in parallel at a sampling rate which is matched for computation purposes to the respective speed;

- the sample signals are each subjected to signal preprocessing which is dependent on the respective speed range;

- the time intervals which represent the period duration of a Doppler signal are recorded in all speed ranges from the point at which the sample signals exceed or undershoot a positive and a negative threshold value, respectively, until the respective next identical overshoot or undershoot of the threshold value;

EP 1 510 834 B1

- the threshold values in each speed range are readjusted on the basis of the sample signals;

- the recorded values of the period durations are averaged in a suitable form in each case for a plurality of periods in the immediate past in each speed range;

- three decision criteria are defined, corresponding to the three speed ranges, for selection of the respective speed range from which the speed is intended to be determined, and

- the calculated speed value from the relevant speed range is transferred to a higher-level evaluation unit.

15. Computer-legible memory medium in which a program for evaluation of Doppler signals in a speed Doppler radar in order to determine speed over ground is stored, which program, when it is processed in a computer, once it has been loaded in the computer memory, carries out the following steps:

- three overlapping speed ranges are defined, which are each conceived for evaluation of different speed values and are sampled in parallel at a sampling rate which is matched for computation purposes to the respective speed;

- the sample signals are each subjected to signal preprocessing which is dependent on the respective speed range;

- the time intervals which represent the period duration of a Doppler signal are recorded in all speed ranges from the point at which the sample signals exceed or undershoot a positive and a negative threshold value, respectively, until the respective next identical overshoot or undershoot of the threshold value;

- the threshold values in each speed range are readjusted on the basis of the sample signals;

- the recorded values of the period durations are averaged in a suitable form in each case for a plurality of periods in the immediate past in each speed range;

- three decision criteria are defined, corresponding to the three speed ranges, for selection of the respective speed range from which the speed is intended to be determined, and

- the calculated speed value from the relevant speed range is transferred to a higher-level evaluation unit.

**Revendications**

1. Procédé pour exploiter des signaux Doppler d'un radar Doppler de vitesse destiné à déterminer la vitesse par rapport au sol, **caractérisé en ce que**

- on définit trois gammes de vitesses qui se chevauchent, chacune d'elles étant conçue pour exploiter différentes valeurs de vitesse et étant échantillonnée en parallèle à des taux d'échantillonnage, adaptés du point de vue de la technique de calcul à la vitesse concernée,
- chacun des signaux d'échantillonnage est soumis à un pré-traitement en fonction de la gamme de vitesses concernée,
- dans toutes les gammes de vitesses, on détecte les intervalles de temps qui s'écoulent depuis le moment où les signaux d'échantillonnage dépassent ou n'atteignent pas une valeur seuil positive ou négative jusqu'à la fois suivante où ils dépassent ou n'atteignent pas de la même façon la valeur seuil, ces intervalles de temps représentant la durée de la période d'un signal Doppler,
- on ajuste les valeurs seuil dans chaque gamme de vitesses à l'aide des signaux d'échantillonnage,
- on calcule la moyenne de façon appropriée dans chaque gamme de vitesses pour les valeurs détectées des durées de période pour plusieurs périodes à la fois dans le passé immédiat,
- on définit trois critères de décision correspondant aux trois gammes de vitesses et destinés à sélectionner la gamme de vitesses concernée à partir de laquelle la vitesse doit être déterminée,
- on transmet la valeur de vitesse calculée à partir de la gamme de vitesses en question à une unité d'exploitation supérieure hiérarchiquement.

2. Procédé selon la revendication 1, **caractérisé en ce que** les valeurs seuil positives et négatives sont lissées de façon exponentielle.

3. Procédé selon la revendication 1 ou 2, **caractérisé en ce que** chacune des valeurs seuil positives et négatives est ajustée approximativement au niveau de la valeur effective des signaux Doppler.

4. Procédé selon l'une des revendications précédentes, **caractérisé en ce que** le filtrage passe-bas est réalisé en décimant les taux d'échantillonnage.

5. Procédé selon l'une des revendications précédentes, **caractérisé en ce que** des parties égales dans les valeurs d'échantillonnage sont supprimées du fait qu'on soustrait de la valeur d'échantillonnage instantanée un signal soumis à un filtrage passe-bas et issu de valeurs d'échantillonnage précédentes.

6. Procédé selon l'une des revendications précédentes, **caractérisé en ce que** la direction de déplacement relatif de l'objet qui envoie les signaux micro-ondes du radar Doppler est déterminée à partir de la direction dans laquelle se décale la phase de deux canaux l'un par rapport à l'autre.

7. Procédé selon la revendication 6, **caractérisé en ce qu'**on forme un critère de décision pour chaque gamme de vitesses en soustrayant l'une de l'autre les sommes des valeurs d'échantillonnage qui sont respectivement additionnées entre le moment où la valeur seuil positive n'est pas atteinte jusqu'à ce que la valeur seuil négative est dépassée sur un des canaux et entre le moment où la valeur seuil négative est dépassée jusqu'à ce que la valeur seuil positive n'est pas atteinte sur l'autre des canaux.

8. Procédé selon la revendication 6 ou 7, **caractérisé en ce que** la gamme de vitesses applicable est sélectionnée à l'aide de la valeur dont le montant est le plus grand parmi tous les critères de décision déterminés.

9. Procédé selon l'une des revendications 1 à 8, **caractérisé en ce que** les valeurs pour la durée de période sont soumises à un filtrage médian.

10. Procédé selon la revendication 9, **caractérisé en ce que** le filtrage médian est effectué à l'aide d'une liste médiane comportant un certain nombre de valeurs passées en triant dans une première liste auxiliaire quatre valeurs pour la durée de période, en élaborant une deuxième liste auxiliaire à partir de la liste médiane à laquelle on retire les deux valeurs les plus petites et les deux valeurs les plus grandes et la première et la deuxième liste auxiliaire sont reclassées en commun dans la liste médiane dans laquelle est prélevée la valeur moyenne.

11. Procédé selon l'une des revendications précédentes, **caractérisé en ce que** la vitesse déterminée est réglée à zéro quand tous les critères de décision sont inférieurs à une valeur limitatrice prédéfinie dans leur gamme de vitesses respective.

12. Procédé selon la revendication 11, **caractérisé en ce que** les valeurs limitatrices destinées à reconnaître l'arrêt sont égales pour toutes les gammes de vitesses.

13. Système pour exploiter des signaux Doppler d'un radar Doppler de vitesse destiné à déterminer la vitesse par rapport au sol, comportant un processeur conçu de manière à exécuter les étapes suivantes :

- on définit trois gammes de vitesses qui se chevauchent, chacune d'elles étant conçue pour exploiter différentes valeurs de vitesse et étant échantillonnée en parallèle à l'aide de taux d'échantillonnage, adaptés du point de vue de la technique de calcul à la vitesse concernée,
- on soumet chacun des signaux d'échantillonnage à un prétraitement en fonction de la gamme de vitesses concernée,
- dans toutes les gammes de vitesses, on détecte le temps qui s'écoule depuis le moment où les signaux d'échantillonnage dépassent ou n'atteignent pas une valeur seuil positive ou négative jusqu'à la fois suivante où ils dépassent ou n'atteignent pas de la même façon la valeur seuil, et cet intervalle de temps représente la durée de période d'un signal Doppler,
- on ajuste les valeurs seuil dans chaque gamme de vitesses à l'aide des signaux d'échantillonnage, appropriée adaptée dans chaque gamme de vitesses pour les valeurs détectées des durées de période pour plusieurs périodes à la fois dans le passé immédiat,
- on définit trois critères de décision correspondant aux trois gammes de vitesses et destinés à sélectionner la gamme de vitesses concernée à partir de laquelle la vitesse doit être déterminée,
- on transmet à une unité d'exploitation supérieure hiérarchiquement la valeur de vitesse calculée à partir de la gamme de vitesses en question.

14. Programme informatique destiné à exploiter des signaux Doppler d'un radar Doppler de vitesse destiné à déterminer la vitesse par rapport au sol et mémorisé sur un support d'enregistrement lisible par ordinateur et, quand il est exécuté sur un ordinateur, le programme informatique réalise les étapes suivantes après qu'il a été chargé dans la mémoire de l'ordinateur :

- on définit trois gammes de vitesses qui se chevauchent, chacune d'elles étant conçue pour exploiter différentes valeurs de vitesse et étant échantillonnée en parallèle à l'aide de taux d'échantillonnage, adaptés du point de vue de la technique de calcul à la vitesse concernée,
- on soumet chacun des signaux d'échantillonnage à un prétraitement en fonction de la gamme de vitesses concernée,
- dans toutes les gammes de vitesses, on détecte le temps qui s'écoule depuis le moment où les signaux d'échantillonnage dépassent ou n'atteignent pas une valeur seuil positive ou négative jusqu'à la fois suivante où ils dépassent ou n'atteignent pas de la même façon la valeur seuil, et cet intervalle de temps représente la durée de période d'un signal Doppler,

- on ajuste les valeurs seuil dans chaque gamme de vitesses à l'aide des signaux d'échantillonnage,

- on calcule la moyenne de façon appropriée dans chaque gamme de vitesses pour les valeurs détectées qu'ont les durées de période pour plusieurs périodes à la fois dans le passé immédiat,

- on définit trois critères de décision correspondant aux trois gammes de vitesses et destinés à sélectionner la gamme de vitesses concernée à partir de laquelle la vitesse doit être déterminée,

- on transmet à une unité d'exploitation supérieure hiérarchiquement la valeur de vitesse calculée à partir de la gamme de vitesses en question.

**15.** Support d'enregistrement, lisible par ordinateur, sur lequel est mémorisé un programme pour exploiter des signaux Doppler d'un radar Doppler de vitesse destiné à déterminer la vitesse par rapport au sol et, quand il est exécuté sur un ordinateur, le programme informatique réalise les étapes suivantes après qu'il a été chargé dans la mémoire de l'ordinateur :

- on définit trois gammes de vitesses qui se chevauchent, chacune d'elles étant conçue pour exploiter différentes valeurs de vitesse et étant échantillonnée en parallèle à l'aide de taux d'échantillonnage, adaptés du point de vue de la technique de calcul à la vitesse concernée,

- on soumet chacun des signaux d'échantillonnage à un prétraitement en fonction de la gamme de vitesses concernée,

- dans toutes les gammes de vitesses, on détecte le temps qui s'écoule depuis le moment où les signaux d'échantillonnage dépassent ou n'atteignent pas une valeur seuil positive ou négative jusqu'à la fois suivante où ils dépassent ou n'atteignent pas de la même façon la valeur seuil, et cet intervalle de temps représente la durée de période d'un signal Doppler,

- on ajuste les valeurs seuil dans chaque gamme de vitesses à l'aide des signaux d'échantillonnage,

- on calcule la moyenne de façon appropriée dans chaque gamme de vitesses pour les valeurs détectées des durées de période pour plusieurs périodes à la fois dans le passé immédiat,

- on définit trois critères de décision correspondant aux trois gammes de vitesses et destinés à sélectionner la gamme de vitesses concernée à partir de laquelle la vitesse doit être déterminée,

- on transmet à une unité d'exploitation supérieure hiérarchiquement la valeur de vitesse calculée à partir de la gamme de vitesses en question.

FIG 1

```
           ┌──────────────────────────┐
           │      Neuer Abtastwert     │
           │    durch A / D-Wandler    │
           └──────────────────────────┘
                         │
                         ▼
           ┌──────────────────────────┐  ┐
           │      Tiefpassfilterung    │  │
           └──────────────────────────┘  │
                         │                │
                         ▼                │  Signalvor-
           ┌──────────────────────────┐  │  verarbeitung
           │   Entfernung von Trends   │  │
           │      und Gleichanteil     │  │
           └──────────────────────────┘  │
                         │                │
                         ▼                │
           ┌──────────────────────────┐  │
           │        Dezimierung        │  │
           └──────────────────────────┘  ┘

                         │
                         ▼
           ┌──────────────────────────┐  ┐
           │      Zustandsautomat      │  │
           └──────────────────────────┘  │
                         │                │  Signalanalyse
                         ▼                │
           ┌──────────────────────────┐  │
           │ Ermittlung des Richtungskriteriums │  │
           └──────────────────────────┘  ┘

                         │
                         ▼
           ┌──────────────────────────┐  ┐
           │      Medianfilterung      │  │
           └──────────────────────────┘  │
                         │                │
                         ▼                │
           ┌──────────────────────────┐  │
           │ Stillstands- Richtungserkennung │  │
           └──────────────────────────┘  │  Datenbewertung
                         │                │
                         ▼                │
           ┌──────────────────────────┐  │
           │  Auswahl des Filterbereiches │  │
           └──────────────────────────┘  │
                         │                │
                         ▼                │
           ┌──────────────────────────┐  │
           │  Plausibilitätsprüfung der │  │
           │       Beschleunigung      │  │
           └──────────────────────────┘  ┘
```

FIG 2

Amplitude

$T_{2\_2'}$

$T_{1\_1'}$

0

Schwellwert

Signal

$T_{3\_3'}$

$T_{4\_4'}$

Zeit

FIG 3

A

Pegel > schwellwert

Pegel < schwellwert

Pegel > schwellwert

D

B

Pegel < -schwellwert

Pegel > -schwellwert

Pegel < -schwellwert

C

# FIG 4A

# FIG 4B

# FIG 4C

## FIG 5

Filterung (k-1)

Liste haupt

| | |
|---|---|
| 0.4 | n3 |
| 0.6 | |
| 1.1 | |
| 2.7 | |
| 14.2 | |
| 23.1 | |
| 31.5 | |
| 1215 | |
| 2312 | |

MEDIAN →

Filterung (k)

Liste neu

| n1 | |
|---|---|
| 1.9 | |
| 4.3 | |
| 32.0 | |
| 35.2 | |

Liste temp

$\frac{n1}{2}$

| | |
|---|---|
| 1.1 | n3 |
| 2.7 | |
| 14.2 | |
| 23.1 | |
| 31.5 | |

Liste haupt

| |
|---|
| 1.1 |
| 1.9 |
| 2.7 |
| 4.3 |
| 14.2 |
| 23.1 |
| 31.5 |
| 32.0 |
| 35.2 |

MEDIAN →